Europäisches Patentamt

European Patent Office

Office européen des brevets

(11) Veröffentlichungsnummer: **0 582 250 A2**

## EUROPÄISCHE PATENTANMELDUNG

(21) Anmeldenummer: **93112355.8**

(22) Anmeldetag: **02.08.93**

(51) Int. Cl.5: **C08G 59/18,** C08L 63/00, C08J 3/00

(30) Priorität: **06.08.92 DE 4225999**

(43) Veröffentlichungstag der Anmeldung:
**09.02.94 Patentblatt 94/06**

(84) Benannte Vertragsstaaten:
**AT BE CH DE DK ES FR GB GR IT LI NL PT SE**

(71) Anmelder: **HOECHST AKTIENGESELLSCHAFT**

**D-65926 Frankfurt(DE)**

(72) Erfinder: **Geisler, Jörg-Peter, Dr.**
**Selztalstrasse 137**
**D-55218 Ingelheim(DE)**
Erfinder: **Petri, Stefan**
**Flachsbühlstrasse 19**
**D-65232 Taunusstein(DE)**

(54) **Vernetzte Polymermikroteilchen auf Epoxidharz-Basis, deren Herstellung und deren Verwendung.**

(57) Vernetzte Polymermikroteilchen auf Epoxidharzbasis, erhalten durch Polymerisation von wäßrigen Dispersionen epoxidgruppenhaltiger Verbindungen (A) in Gegenwart von bis zu 0,2 mol, vorzugsweise 0,02 bis 0,15 mol (bezogen auf den in (B) enthaltenen Stickstoff) pro Epoxidäquivalent einer stickstoffhaltigen organischen Verbindung (B) und anschließende Isolierung.

Diese vernetzten Polymermikroteilchen, vorzugsweise deren wäßrige Dispersionen, eignen sich als organische Füllstoffe, Pigmente, Mattierungsmittel und/oder Verstärkungsmittel für Bindemittelsysteme sowie deren Einzelkomponenten, Lackzubereitungen, Beschichtungs- und Formmassen, Zwischenbeschichtungen, Klebstoffe udgl., vorzugsweise auf wäßriger Basis.

EP 0 582 250 A2

Rank Xerox (UK) Business Services
(3.10/3.09/3.3.4)

Aus der EP-A 0 421 238 sind flockungsstabile, wäßrige Dispersionen von vernetzten Polymermikroteilchen (nachfolgend auch Mikrogele genannt) bekannt, die durch Umsatz epoxygruppenhaltiger Verbindungen (a) mit Polyaminen (b) hergestellt werden, wobei die Funktionalität bei (a) größer als eins, vorzugsweise 2 - 10 und insbesondere 2 - 3 und von (b) im statistischen Mittel zwei oder größer als zwei ist. Vorzugsweise werden die epoxidgruppenhaltigen Verbindungen (a) dabei in Form flockungsstabiler, wäßriger Dispersionen eingesetzt, und der Umsatz von (a) und (b) erfolgt im wäßrigen Milieu. Das Verhältnis von Polyepoxid (a) und Polyamin (b) wird dabei so gewählt, daß 25 bis 100 %, vorzugsweise 50 bis 100 % der Epoxidäquivalente mit Amin umgesetzt werden. Die so erhaltenen Mikrogele weisen eine mittlere Teilchengröße von höchstens 5 $\mu$m auf, sind in organischen Lösemitteln nur wenig quellbar und eignen sich zur Verwendung als organische Füllstoffe in wäßrigen Lackzubereitungen, wie z. B. Elektrotauchlacken oder Füllerlacken.

Diese Polymermikropartikel neigen jedoch bei thermischer Belastung, z. B. bei Erhitzen auf Temperaturen von 100 - 300 °C über 10 - 60 min zur Vergilbung, was insbesondere in weißen Einbrennlack-Formulierungen als technologischer Nachteil angesehen werden muß. Es bestand daher das Bedürfnis, diesen Nachteil ganz oder zumindest teilweise zu beseitigen.

Überraschend wurde nun gefunden, daß sich wäßrige Dispersionen hochvernetzter Polymermikropartikel auch dadurch herstellen lassen, daß man die epoxidgruppenhaltigen Verbindungen in Gegenwart einer katalytischen Menge einer Lewis-basischen, stickstoffhaltigen, organischen Verbindung (B) für eine bis 20 Stunde(n) unter Rühren auf Temperaturen von 30 bis 100 °C erwärmt.

Im Gegensatz zu der der EP-A 0 421 238 zugrundeliegenden stöchiometrischen Umsetzung zwischen Epoxid- und N-H-Gruppen erfolgt die Vernetzung im vorliegenden Fall durch Homopolymerisation der epoxidgruppenhaltigen Verbindungen, die durch stickstoffhaltige Lewis-Basen (B) initiiert wird.

Zur Herstellung der Polymermikroteilchen ist die Verwendung wäßriger Dispersionen (A) der epoxidgruppenhaltigen Verbindungen notwendig, da bei Erwärmung von lösemittelhaltigen oder -freien Polyepoxiden in Gegenwart stickstoffhaltiger, organischer Verbindungen, wie bekannt (siehe z. B. H. Lee, K. Neville, Handbook of Epoxy Resins, Mac Graw-Hill Book Co., 1967, Chapter 5), Vernetzung innerhalb der Gefäß- bzw. Flächendimensionen unter Ausbildung makroskopischer Netzwerke (Makrogelation) erfolgt, während bei dispergierten Epoxiden die Vernetzung innerhalb der Micellen-Dimensionen stattfindet.

Die erfindungsgemäßen Mikrogele haben im allgemeinen eine sphärische Struktur und sind hochvernetzt, so daß in Gegenwart organischer Lösungsmittel nur eine geringe oder keine Quellung auftritt. Insbesondere zeigen die erfindungsgemäßen Polymermikropartikel bei thermischer Belastung keine oder eine nur geringe Dunkelfärbung und eignen sich, da sie ähnliche technologische Eigenschaften aufweisen, wie die aus EP-A 0 421 238 bekannten Mikrogele, daher hervorragend für die verschiedensten Einsatzgebiete, z. B. als organische Füllstoffe oder als Mattierungsmittel in wäßrigen Lackzubereitungen.

Gegenstand der vorliegenden Erfindung sind daher vernetzte Polymermikroteilchen auf Epoxidharzbasis, die durch Polymerisation von wäßrigen Dispersionen epoxidgruppenhaltiger Verbindungen (A) in Gegenwart von bis zu 0,2 mol (bezogen auf den in (B) enthaltenen Stickstoff) pro Epoxidäquivalent einer stickstoffhaltigen organischen Verbindung (B) und anschließende Isolierung erhalten werden. Gegenstand der Erfindung sind auch die wäßrigen Dispersionen dieser vernetzten Polymermikroteilchen.

Die Erfindung beinhaltet weiterhin ein Verfahren zur Herstellung von wäßrigen Dispersionen (C) vernetzter Polymermikroteilchen, welches darin besteht, daß man wäßrige Dispersionen von epoxidgruppenhaltigen Verbindungen (A) in Gegenwart von bis zu 0,2 mol (bezogen auf den in (B) enthaltenen Stickstoff) pro Epoxidäquivalent der wäßrigen Dispersion (A) einer stickstoffhaltigen, organischen Verbindung (B) bei Temperaturen von 30 bis 100 °C zu den vernetzten Polymerteilchen polymerisiert.

Schließlich hat die Erfindung auch vorzugsweise wäßrige, gegebenenfalls andere anorganische und/oder organische Pigmente, Füllstoffe und andere übliche Lackadditive enthaltende Lackzubereitungen, Beschichtungs- und Formmassen zum Gegenstand, welche die obigen Mikrogeldispersionen (C) oder die daraus isolierten vernetzten Polymermikroteilchen enthalten.

Die durchschnittliche mittlere Teilchengröße (Primärkorngröße, bestimmt durch Photokorrelationsspektroskopie) der erfindungsgemäßen Mikrogele liegt in der wäßrigen Dispersion unterhalb von 5 $\mu$m und vorzugsweise zwischen 0,2 und 3,0 $\mu$m. Der Gehalt an vernetzten Polymermikroteilchen in den wäßrigen Dispersionen (C) liegt zumeist bei 10 bis 90 Gew.-%, vorzugsweise bei 40 bis 70 Gew.-% und insbesondere bei 45 bis 65 Gew.-%, bezogen auf die Dispersion. Die Viskosität der Mikrogel-Dispersionen gemessen nach Brookfield bei 25 °C liegt zwischen 10 bis 20000 mPa*s, vorzugsweise zwischen 10 und 10000 mPa*s und insbesondere zwischen 100 und 6000 mPa*s. Die Glasübergangstemperatur (der isolierten Mikrogele) beträgt vorzugsweise mindestens 30 °C und insbesondere mindestens 40 °C.

Die erfindungsgemäßen Mikrogele können vernetzungsaktive Zentren enthalten, die bei Raumtemperatur noch nicht vernetzungswirksam sind. Genannt seien hier beispielsweise Hydroxylgruppen, Carboxylgruppen und verkappte Isocyanatgruppen (Urethangruppen) etc. oder Gemische davon [siehe hierzu auch W. E.

Funke, J. of Coatings Technol., Vol. 60, S. 67 - 76 (1988)]. Auf diese Weise wird das Mikrogel durch Härtung bei erhöhter Temperatur, gegebenenfalls in Anwesenheit eines Katalysators, besonders fest in den gehärteten Lackfilmen eingebaut und wirkt auch selbst als Vernetzer (vernetzender Füllstoff). Bei gleichzeitiger Anwesenheit beispielsweise von Hydroxylgruppen und verkappten Isocyanatgruppen sind die Mikrogele sogar selbstvernetzend.

Bevorzugt beträgt der Gehalt an organischen Lösungsmitteln in den wäßrigen Mikrogeldispersionen (C) weniger als 25 Gew.-%, bezogen auf die Dispersion, und insbesondere weniger als 10 Gew.-%. Die Lösungsmittel können bereits in den wäßrigen Epoxidharz-Dispersionen (A) enthalten sein und/oder während und/oder nach der Polymerisationsreaktion zugegeben werden.

Als organische Lösungsmittel kommen insbesondere Glykole, Mono- und Diether und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole, Ester und Ketone sowie aliphatische, cycloaliphatische und/oder aromatische Kohlenwasserstoffe in Betracht, wobei diese Lösungsmittel einzeln oder im Gemisch eingesetzt werden können.

Als Beispiele seien genannt: Ethylenglykol, Ethylenglykolmonomethylether, Ethylenglykoldimethylether, Diethylenglykoldimethylether, Propylenglykol, Propylenglykolmonomethylether, Propylenglykoldimethylether, Butylglykol, Butyldiglykol, Methoxypropanol, Ethoxypropanol, Ethanol, 1- und 2-Propanol, Butanol, Cyclohexanol, Benzylalkohol, Diacetonalkohol, Essigsäurethylester, Ethoxyethylpropionat, Aceton, Methylethyl-keton, Cyclohexanon, Hexan, Cyclohexan, Toluol und Xylol.

Bevorzugt werden Ethylenglykol, Butylglykol, Methoxypropanol, Ethoxypropanol, 2-Propanol und/oder Benzylalkohol eingesetzt.

Die wäßrigen Mikrogele (C) können ferner noch weitere übliche Lackadditive wie Füllstoffe, Pigmente, Katalysatoren, Verlaufs- bzw. Verdickungsmittel, Entschäumer, Netzmittel, Konservierungsmittel, Schutzkolloide udgl. enthalten. Vorzugsweise werden solche Zusätze nach Beendigung der Polymerisationsreaktion zu der wäßrigen Dispersion der Polymermikropartikel gegeben.

Die erfindungsgemäßen Dispersionen (c) zeigen während mehrerer Tage, zumeist auch während mehrerer Wochen, keine irreversiblen Sedimentationserscheinungen.

Die zur Herstellung der erfindungsgemäßen Dispersionen (C) geeigneten wäßrigen Dispersionen epoxidgruppenhaltiger Verbindungen (A) enthalten im allgemeinen eine oder mehrere epoxidgruppenhaltige Verbindungen mit im Mittel mindestens einer, vorzugsweise mindestens zwei Epoxidgruppen pro Molekül, welche in Gegenwart eines externen (vgl. u. a. US-PS 4 122 067 und EP-A 0 081 163) oder eines inneren, statistisch eingebauten (sog. selbstemulgierende Epoxidharze) Emulgators in einem wäßrigen Medium dispergiert sind.

Beispiele für derartige wäßrige Dispersionen epoxidgruppenhaltiger Verbindungen (A) sind in der EP-A 51 483, DE-A 36 43 751 und DE-A 38 20 301 beschrieben, auf die hier Bezug genommen wird.

Wäßrige Epoxidharz-Dispersionen (A), die zur Herstellung waßriger, noch vernetzungsaktive Zentren enthaltender Polymermikroteilchen-Dispersionen herangezogen werden können, sind in der EP-A 0 421 238 beschrieben.

Bevorzugt werden wäßrige Epoxidharz-Dispersionen eingesetzt, die folgende Komponenten enthalten:

(1) 20 bis 75 Gew.-%, bezogen auf die gesamte Dispersion, eines Epoxidharzes, das ein Kondensationsprodukt aus

    a) 50 bis 95, vorzugsweise 55 bis 85 Gew.-% einer oder mehrerer Epoxidverbindungen mit im Mittel mindestens einer, vorzugsweise mindestens zwei Epoxidgruppen pro Molekül und einem Epoxidäquivalentgewicht von 90 bis 3000 g/Eq. und

    b) 5 bis 50, vorzugsweise 15 bis 45 Gew.-% eines aromatischen Polyols darstellt;

(2) 3 bis 20, vorzugsweise 4 bis 15 Gew.-%, bezogen auf die gesamte Dispersion, eines Emulgators, enthaltend

    a) 20 bis 100, vorzugsweise 40 bis 60 Gew.-% eines Kondensationsproduktes aus einem aliphatischen Polyol mit einem mittleren Molekulargewicht (Mw) von 200 bis 20000 und einer Epoxidverbindung mit mindestens zwei Epoxidgruppen pro Molekül und einem Epoxidäquivalentgewicht von 100 bis 2000 g/Eq., wobei das Äquivalentverhältnis der OH-Gruppen zu den Epoxidgruppen 1 : 0,85 bis 1 : 1,5 ist und das Epoxidäquivalentgewicht dieses Kondensationsproduktes zwischen 5000 und 400000 g/Eq. liegt,

    b) bis zu 50, vorzugsweise bis zu 30 Gew.-% eines organischen Lösungsmittels und

    c) bis zu 80, vorzugsweise 15 bis 60 Gew.-% Wasser;

(3) bis zu 10 Gew.-%, bezogen auf die gesamte Dispersion, organische Lösungsmittel, wobei gegebenenfalls vorhandene Lösungsmittel gemäß (2)b) mit einbezogen sind;

3

(4) Wasser in der an 100 Gew.-% fehlenden Menge.

Diese Epoxidharz-Dispersionen werden dadurch hergestellt, daß man das Epoxidharz (1) zunächst mit dem Emulgator (2) sowie gegebenenfalls organischen Lösemitteln gemäß (3) und anschließend mit Wasser (4) verrührt.

Das Epoxidharz entsprechend (1) besitzt vorzugsweise ein Epoxidäquivalentgewicht von 350 bis 4000 g/Eq., insbesondere von 400 bis 3000 g/Eq. Die mittlere Teilchengröße des dispergierten Harzes ist in der Regel nicht höher als 1,0 $\mu$m und beträgt vorzugsweise 0,2 bis 0,8 $\mu$m. Der Anteil dieses Harzes in der Gesamtdispersion beträgt 20 bis 75 Gew.-%, vorzugsweise etwa 25 bis 65 Gew.-%.

Bei den 1,2-Epoxidverbindungen entsprechend (1)a und (2)a handelt es sich um Polyepoxide mit im Mittel mindestens mehr als einer, vorzugsweise mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 90 und 500 g/Eq., insbesondere zwischen 100 und 350 g/Eq..

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan,4,4'-Dihydroxydiphenyl, 4,4'-Dihydroxybenzophenol, Bis-(4-hydroxyphenyl)-1,1-ethan, 2,2-Bis[4-(2-Hydroxypropoxy)-phenyl]-propan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)sulfon u. a. sowie die Halogenierungs- und Hydrierungsprodukte der vorstehend genannten Verbindungen. Bisphenol A ist hierbei besonders bevorzugt.

Als Beispiele für mehrwertige Alkohole seien Ethylenglykol, Diethylenglykol, Triethylenglykol, Polyethylenglykole (n = 1 bis 35), 1,2-Propylenglykol, Polypropylenglykole (n = 1 bis 15), 1,3-Propylenglykol, 1,4-Butandiol, 1,5-Pentandiol, 1,6-Hexandiol, 1,2,6-Hexantriol, Glycerin, Neopentylglykol, Trimethylolethan, Trimethylolpropan und Umsetzungsprodukte von aromatischen, aliphatischen oder cycloaliphatischen Polyolen, bei-spielsweise Trimethylolpropan oder Bisphenol A, mit Ethylenoxid und/oder Propylenoxid genannt. Polypropylenglykole (n = 8 - 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A. M. Paquin, Springer Verlag, Berlin 1958, Kapitel IV und in dem oben bereits zitierten Werk von Lee und Neville. Die genannten Epoxidverbindungen können einzeln oder im Gemisch eingesetzt werden.

Als aromatische Polyole entsprechend (1)b kommen vorzugsweise die aromatischen OH-gruppenhaltigen Verbindungen in Frage, die vorstehend bei den Komponenten (1)a und (2)a beschrieben wurden, also mehrwertige, vorzugsweise zweiwertige Phenole, deren Halogenierungsprodukte und/oder Novolake. Besonders bevorzugt ist auch hier Bisphenol A.

Bei den aliphatischen Polyolen der Komponente (2)a handelt es sich vorzugsweise um Polyetherpolyole (Polyalkylenglykole) mit mittleren Molekulargewichten (Mw; Gelpermeationschromatographie; Polystyrolstandard) von bevorzugt zwischen 600 und 12000, insbesondere 2000 bis 8000 und OH-Zahlen zweckmäßigerweise von 10 bis 600, bevorzugt 15 bis 120. Diese Polyetherpolyole besitzen vorzugsweise nur entständige, primäre OH-Gruppen. Beispielsweise seien hier Blockcopolymere aus Ethylenoxid und Propylenoxid sowie Polyethylen-, Polypropylenglykole, genannt, wobei auch Gemische der jeweiligen Polyalkylenglykole eingesetzt werden können. Vorzugsweise werden Polyethylenglykole verwendet.

Vorzugsweise wird das Dispergiermittel (2)a durch Kondensation der genannten Polyetherpolyole mit den Polyglycidylethern in Gegenwart geeigneter Katalysatoren bei 50 bis 200 °C, vorzugsweise bei 90 bis 170 °C, hergestellt, wobei das Äquivalentverhältnis der OH-Gruppen zu den Epoxidgruppen 1 : 0,85 bis 1 : 1,5, vorzugsweise 1 : 0,95 bis 1 : 1,25 und das Epoxidäquivalentgewicht des Kondensationsproduktes mindestens 5000 g/Eq., vorzugsweise 100000 g/Eq. bis 400000 g/Eq. beträgt.

Als Katalysatoren für die Herstellung des Dispergiermittels (2)a eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumethylat und Kaliumdodecylat sowie die Alkalisalze von Carbonsäuren, wie zum Beispiel Natrium-und Lithiumstearat. Ebenfalls geeignet sind starke anorganische und organische Protonsäuren, zum Beispiel Phosphorsäure, Schwefelsäure, Tetrafluorborsäure und Benzolsulfonsäure. Ferner können als Katalysatoren Lewis-Säuren verwendet werden. Als Beispiele seien Zinn(IV)tetrachlorid, Titan(IV)tetrachlorid, Titan(IV)tetraisopropylat, Triethyloxoniumtetrafluoroborat sowie Bortrifluorid und seine Komplexe, zum Beispiel mit Phosphorsäure, Essigsäure (1 : 1 und 1 : 2), Methanol, Diethylether, Tetrahydrofuran, Phenol, Ethylenglykolmonoethylether, Polyethylenglykol (MG 200), Dimethylsulfoxyd, Di-n-Butylether, Di-n-Hexylether, Bernsteinsäure und aliphatischen, cycloaliphatischen, araliphatischen Aminen sowie Stickstoff-Heterocyclen genannt.

Bevorzugt werden als Katalysatoren $BF_3$-Diethylether, $BF_3$-Essigsäure und wäßrige Tetrafluorborsäure eingesetzt. Die Menge an Katalysator beträgt im allgemeinen 0,1 bis 5, vorzugsweise 0,1 bis 1 Gew.-%, bezogen auf das Reaktionsgemisch. Zur besseren Dosierung kann der Katalysator mit einem der oben genannten organischen Lösungsmittel verdünnt werden.

Zur Herstellung des Dispergiermittels erwärmt man die umzusetzenden Gemische aus Hydroxylgruppen und Epoxidgruppen enthaltenden Verbindungen bis zu der Temperatur, bei der die Kondensation mit ausreichender Geschwindigkeit d. h. in 30 min bis 5 Stunden, abläuft. Die Umsetzung verfolgt man zweckmäßig über die Zunahme des Epoxidäquivalents, das eine Verminderung der Epoxidgruppen anzeigt. Die Reaktion kann durch Kühlung unter die Reaktionstemperatur abgebrochen werden.

Das so gewonnene Kondensationsprodukt (2)a kann als solches (100%ig) als Dispergiermittel (2) zur Herstellung der Epoxidharz-Dispersionen verwendet werden. Vorzugsweise wird jedoch aus Gründen der besseren Handhabbarkeit eine Mischung von 20 bis 99, vorzugsweise 40 bis 60 % des Kondensationsproduktes (2)a und einem wäßrigen Medium, bestehend aus (bezogen auf die gesamte Mischung) bis zu 50, vorzugsweise bis zu 30 %, eines organischen Lösungsmittels (2)b und 1 bis 80 %, vorzugsweise 15 bis 60 %, Wasser (2)c hergestellt und diese Mischung als Emulgator (2) verwendet.

Als organische Lösungsmittel entsprechend der Komponente (2)b kommen die oben genannten in Betracht, wobei bevorzugt Butylglykol, Methoxypropanol, Ethoxypropanol, 2-Propanol und/oder Benzylalkohol verwendet werden.

Die bevorzugt verwendeten Epoxidharz-Dispersionen enthalten 4 bis 15 Gew.-% des Emulgators (2).

Als organische Lösungsmittel gemäß der Komponente (3) kommen ebenfalls die oben genannten Lösungsmittel in Frage, wobei bevorzugte Lösungsmittel wiederum Butylglykol, Methoxypropanol, Ethoxypropanol, 2-Propanol und/oder Benzylalkohol sind.

Der Gesamtgehalt an organischen Lösungsmitteln in der Dispersion, berechnet als die Summe der Lösungsmittelmenge (2)b und (3), beträgt bis zu 10 Gew.-%, bezogen auf die gesamte Dispersion, vorzugsweise weniger als 6 Gew.-%.

Zur Herstellung der vorzugsweise verwendeten Epoxidharz-Dispersionen wird zunächst das Epoxidharz (1) durch Kondensation der Komponenten (1)a und (1)b bei erhöhten Temperaturen, im allgemeinen bei 100 bis 220 °C, vorzugsweise bei 150 bis 180 °C, in Gegenwart eines die Kondensation beschleunigenden Katalysators hergestellt.

Werden zwei oder mehrere Epoxidverbindungen (1)a eingesetzt, so wird die Kondensationsreaktion vorzugsweise in zwei Stufen dergestalt durchgeführt, daß in einer ersten Reaktion eine oder mehrere Komponenten (1)a mit den Komponenten gemäß (1)b in einem Mengenverhältnis umgesetzt werden, daß dieses erste Kondensationsprodukt ein Epoxid-Äquivalentgewicht von größer 5000 g/Eq., vorzugsweise größer 20000 g/Eq., besitzt und noch freie phenolische Gruppen aufweist, und in einer weiteren Kondensationsreaktion dieses erste Kondensationsprodukt mit weiteren Epoxidverbindungen gemäß (1)a umgesetzt wird, so daß schließlich das gewünschte Epoxidharz (1) erhalten wird.

Geeignete Kondensationskatalysatoren sind beispielsweise Phosphine, wie Triphenylphosphin, Phosphoniumsalze, wie z. B. Benzyltrimethylphosphoniumchlorid, tertiäre Amine, wie N,N-Dimethylbenzylamin, quartäre Ammoniumsalze, wie z. B. Tetramethylammoniumchlorid, Alkalihydroxide, wie Natriumhydroxid und Lithiumhydroxid, Alkalicarbonate, wie Natriumcarbonat und Lithiumcarbonat, Alkalisalze organischer Säuren, wie z. B. Natriumformiat, Lithiumbenzoat und Lithiumstearat, Lewis-Säuren, wie z. B. Bortrifluorid und seine Komplexe, Titantetrachlorid, Zinnchlorid und Triethyloxoniumtetrafluoroborat.

Anschließend werden dem Epoxidharz (1) das Dispergiermittel (2) und gegebenenfalls organische Lösungsmittel gemäß (3) zugegeben und einige Zeit, vorzugsweise für 15 bis 180, insbesondere 30 bis 90 Minuten, verrührt. Die Zugabe des Dispergiermittels erfolgt bei höheren Temperaturen, beispielsweise bei 60 bis 200 °C, vorzugsweise bei 70 bis 120 °C.

Danach wird die entsprechende Menge an Wasser (4), vorzugsweise in mehreren Teilmengen, unter kräftigem Rühren zudosiert, wodurch die wäßrige Dispersion entsteht. Auch die Zugabe des Wassers erfolgt bei erhöhten Temperaturen, beispielsweise bei 30 bis 100 °C, vorzugsweise bei 50 bis 90 °C.

Anschließend können noch übliche Additive wie Verlaufs- bzw. Verdickungsmittel, Entschäumer, Netzmittel, Konservierungsmittel, Schutzkolloide udgl. zugegeben werden.

Die Dispergierung des Epoxidharzes (1) in Wasser erfolgt zweckmäßigerweise mit geeigneten Dispergierapparaten, beispielsweise mit einem schnelllaufenden Flügelrührer, einem Mehrimpulswendelrührer, einer Kolloidmühle, einem Homogenisator, einem Dissolver oder einem sonstigen Schnellmischer mit einer hohen Scherkraft.

Der Gesamtfeststoffgehalt der vorzugsweise eingesetzten wäßrigen Epoxidharz-Dispersionen kann zwischen 10 und 80 Gew.-% betragen, zweckmäßigerweise liegt er zwischen 35 und 70 Gew.-% und vorzugsweise zwischen 45 und 65 Gew.-%. Der Gehalt an Wasser beträgt vorzugsweise 20 bis 80, insbesondere 30 bis 60 Gew.-%.

Die Viskosität dieser Epoxidharz-Dispersionen beträgt im allgemeinen zwischen 200 und 30000 mPa.s, vorzugsweise zwischen 750 und 7000 mPa*s.

Die Epoxidharzdispersionen können noch übliche Additive wie Verlaufs- bzw. Verdickungsmittel, Entschäumer, Netzmittel, Konservierungsmittel, Schutzkolloide udgl. enthalten.

Als katalytisch wirksame Verbindungen gemäß (B) können prinzipiell alle aliphatischen, cycloaliphatischen, araliphatischen, aromatischen, heterocyclischen und/oder heteroaromatischen Verbindungen eingesetzt werden, die mindestens ein Stickstoffatom enthalten, welches über ein freies Elektronenpaar verfügt (Lewis-Basen). Geeignete Verbindungen (B) können ein oder mehrere Stickstoffatome enthalten, die der vorstehend gegebenen Definition genügen, wobei, falls mehrere definitonsgemäße Stickstoffatome vorhanden sind, deren Substitutionsmuster gleich oder verschieden sein kann. Sie können ferner noch weitere funktionelle Gruppen wie beispielsweise Hydroxyl-, Carboxyl- und Thiolgruppen, Halogene, Doppelbindungen oder Amidgruppen enthalten.

Besonders geeignet sind tertiäre Amine wie zum Beispiel Triethylamin, Tributylamin, N-Methyl-piperidin, N,N-Dimethylbenzylamin, N,N-Dimethylethanolamin und N-Methyldiethanolamin sowie aromatische Stickstoff-Hetereocyclen wie zum Beispiel (substituierte) Imidazol(e), Pyridin(e) und (Iso)Chinolin(e).

Da unter den Herstellungsbedingungen jedoch primäre und sekundäre Amine mit den in (A) vorliegenden Epoxidgruppen unter Bildung von tertiären Aminogruppen reagieren, können auch Verbindungen mit primären und/oder sekundären Aminogruppen verwendet werden.

Als Beispiele seien genannt: Propylamine, Butylamine, Octylamine, Cyclohexylamin, Benzylamin, Ethanolamin, Fettamine, Diethylamin, Dipropylamin, Diethanolamin, Pyrrolidin, Piperidin, N-Methylbenzylamin.

Als Beispiele für Verbindungen (B), die mehrere Stickstoffatome enthalten, seien genannt: Ethylendiamin, Hexamethylendiamin, 2-Methylpentamethylendiamin, Neopentandiamin, Cyclohexandiamin, Trimethylhexamethylendiamin, Isophorondiamin, meta-Xylylendiamin, Phenylendiamin, Diazabicyclooctan, Diethylentriamin, Triethylentetramin, Bis-hexamethylendiamin, 2-Aminoethyl-piperazin, Bis(aminopropyl)methylamin, N,N-Dimethylaminopropylamin, N,N,N',N'-Tetramethylethylendiamin, N,N,N',N'',N''-Pentamethyl-diethylentriamin.

Natürlich können auch Umsetzungsprodukte von Stickstoffverbindungen, wie beispielsweise Mannich-Basen, Polyoxyalkylenamine, Melaminderivate und/oder Epoxid-Amin-Addukte als stickstoffbasische Initiatoren (B) herangezogen werden.

Geeignete Verbindungen (B) können einzeln oder im Gemisch eingesetzt werden.

Bevorzugt werden zur Herstellung der erfindungsgemäßen Polymermikropartikel-Dispersionen (C) Triethylamin, N,N-Dimethylethanolamin, N-Methyldiethanolamin, N,N-Dimethylbenzylamin, Piperidin und Bis(aminopropyl)methylamin verwendet.

Die katalytisch wirksamen Stickstoffverbindungen (B) werden bei der Herstellung der erfindungsgemäßen wäßrigen Mikrogeldispersionen in einer Menge von bis zu 0,2 mol (bezogen auf den in (B) enthaltenen Stickstoff) pro Epoxidäquivalent der wäßrigen Epoxidharzdispersionen (A) eingesetzt. Da eine Verwendung zu großer Mengen an (B) zur Verschlechterung der technologischen Eigenschaften der Polymermikropartikel, insbesondere zu einer größeren Vergilbungsneigung führt, andererseits bei Einsatz zu geringer Mengen an (B) die Reaktionszeit bis zum Umsatz aller Epoxidgruppen deutlich verlängert wird, werden die Stickstoffverbindungen (B) bevorzugt in einer Menge von 0,02 - 0,15 mol (bezogen auf den in (B) enthaltenen Stickstoff) pro Epoxidäquivalent in (A) eingesetzt. Im übrigen kann der Fachmann die hinsichtlich Reaktionszeit und technologischen Produkteigenschaften optimale Menge an (B) leicht durch Vorversuche ermitteln.

Die katalytisch wirksamen Verbindungen (B) können bei der Herstellung der Mikrogel-Dispersionen als solche eingesetzt werden. Um eine schnellere und bessere Verteilung in den Epoxidharzdispersionen (A) zu gewährleisten werden die Initiatoren (B) aber vorzugsweise in einem organischen Lösungsmittel(gemisch) und/oder Wasser gelöst. Als organische Lösungsmittel sind die oben beschriebenen geeignet.

Zur Herstellung der erfindungsgemäßen Mikrogeldispersionen (C) wird zunächst die wäßrige Epoxidharz-Dispersion (A) vorzugsweise unter einer Schutzgasatmosphäre, wie beispielsweise unter Stickstoff oder Argon, bei guter Rührung auf eine Temperatur von 30 bis 100 °C erwärmt. Die Reaktionstemperatur ist durch den wäßrigen, lösemittelarmen Charakter der Epoxidharzdispersion (A) auf maximal 100 °C (Sdp. des Wassers) begrenzt, anderseits ist bei zu geringen Reaktionstemperaturen der Reaktionsfortschritt schleppend. Vorzugsweise wird daher auf eine Temperatur von 60 bis 95 °C erwärmt. Gegebenenfalls können dabei noch organische Lösungsmittel zugegeben werden.

Nach Erreichen der Reaktionstemperatur wird die stickstofforganische Verbindung (B), vorzugsweise gelöst in einem organischen Lösungsmittel (Gemisch) und/oder Wasser, zugegeben und weiter gerührt, bis das Rest-Epoxidäquivalentgewicht des Reaktionsgemisches mehr als 20.000 g/Eq., vorzugsweise mehr als 50.000 g/Eq. ist.

Ein hoher Vernetzungsgrad der enstandenen Polymermikropartikel ist auch daran zu erkennen, daß das Reaktionsgemisch im Gegensatz zu der Ausgangs-Epoxidharzdispersion (A) nicht mehr klar in Aceton bzw. anderen organischen Lösungsmitteln löslich ist.

Im allgemeinen ist die Polymerisationsreaktion der Epoxidgruppen-haltigen Verbindungen in (A) nach einer Zeitdauer von einer bis zwölf Stunde(n) beendet.

Der fertigen wäßrigen Polymermikropartikeldispersion können gegebenenfalls noch organische Lösungsmittel sowie weiter übliche Lackadditive wie Füllstoffe, Pigmente, Katalysatoren, Verlaufs- bzw. Verdickungsmittel, Entschäumer, Netzmittel, Konservierungsmittel, Schutzkolloide u. dgl. zugegeben werden.

Die Erfindung bezieht sich ferner auf die vernetzten Polymermikroteilchen selbst, die sich aus den wäßrigen Dispersionen (C) dieser Polymermikroteilchen mit bekannten Methoden in getrockneter Form isolieren lassen. Zu nennen sind hier beispielsweise Elektrolytfällung, Sprühtrocknung, Gefriertrocknung oder Zentrifugieren. Die Polymermikropartikel fallen hierbei im allgemeinen in feinteiliger, pulvriger Form an. Allerdings findet bei der Trocknung der Polymermikropartikeldispersionen, bedingt durch Agglomeration bzw. Aggregation, eine Erhöhung der Primärkorngröße statt. Die getrockneten Mikrogele sind als solche lagerstabil und unterliegen bei Raumtemperatur keinen weiteren chemischen oder physikalischen Veränderungen. Die isolierten Mikrogele lassen sich in wäßrigen oder organischen Medien redispergieren bzw. suspendieren. Um ausreichend feinteilige und somit stabile Dispersionen bzw. Suspensionen zu erzielen, erfolgt die Dispergierung in dem gewünschten Medium zweckmäßigerweise mit geeigneten Dispergierapparaten, beispielsweise mit einem Dissolver, einer Kolloidmühle oder einem sonstigen Schnellmischer. Vorzugsweise werden zur Redispergierung wäßrige Medien verwendet, die in ihrer Zusammensetzung denen der Ausgangs-Polymermikropartikeldispersionen (C) entsprechen.

Die erfindungsgemäßen Mikrogeldispersionen bzw. die daraus isolierten Mikropartikel eignen sich in hervorragender Weise als organische Füllstoffe, Mattierungsmittel und/oder Verstärkungsmittel für Bindemittelsysteme, Lacke, Beschichtungs- und Formmassen, Klebstoffe u. ä. insbesondere für solche auf wäßriger Basis. Als Lacke auf wäßriger Basis, was hier bedeuten soll, daß diese höchstens 25 Gew,-%, vorzugsweise höchstens 10 Gew.-% bezogen auf Wasser, an üblichen Lacklösemitteln enthalten, kommen beispielsweise die gebräuchlichen Elektrotauchlacke für die Grundierung von Fahrzeugkarrosserien, Füllerlacke für Autolackierungen, aber auch Bautenlacke und Fußbodenbeschichtungen in Frage.

Sie dienen insbesondere zum teilweisen Ersatz von Weißpigmenten und/oder Füllstoffen in Lacken sowie teilweise auch als vernetzende Füllstoffe und als Füllstoff für Transparentlacke.

Gegenüber konventionellen Weißpigmenten wie Titandioxid, basischem Bleisilikat, Lithopone, Zinkoxid, Bentone, Zinksulfid und Füllstoffen wie Talkum, Kaolin, Glimmer, Feldspat, Bariumsulfat, Calciumsulfat, Calciumcarbonat usw. weisen die erfindungsgemäßen organischen Mikrogele als Vorteile eine deutlich geringere Dichte und daher durch eine erhöhte Ergiebigkeit aus, d.h. das erzielbare Beschichtungsvolumen kann mit einer deutlich geringeren Pigmentgewichtsmenge erfolgen als mit anorganisch gefüllten Systemen.

Ferner zeigen die erfindungsgemäßen Mikrogeldispersionen bzw. die daraus isolierten Mikrogele eine ausreichende Feinheit, die einen Einsatz ohne weiteres Anreiben bzw. Vermahlen ermöglicht. Sie können daher direkt als wäßrige Dispersion eingesetzt werden und ermöglichen demgemäß eine stark vereinfachte Handhabung und ein Einstellen eines in weiten Grenzen variablen Pigment-Bindemittelverhältnisses (PBV).

Da die erfindungsgemäßen Mikrogele überwiegend eine sphärische Teilchenform aufweisen, treten durch den Ersatz konventioneller Pigmente oder Füllstoffe mit den Polymermikropartikeln keine größen Änderungen in den rheologischen Eigenschaften des Lacksystems ein.

Gegenüber der aus EP-A 0 421 238 bekannten Mikrogelen auf Epoxidharzbasis zeichnen sich die erfindungsgemäßen Polymermikropartikel durch eine drastisch verringerte Neigung zur Vergilbung bzw. Dunkelfärbung bei Temperaturbelastung aus und eignen sich daher insbesondere für Anwendungen in Einbrennlackierungen.

**BEISPIELE**

**I. Herstellung der vorzugsweise verwendeten wäßrigen Epoxidharzdispersion**

1) Herstellung des Dispergiermittels (2)

225,1 g technisches Polyethylenglykol mit einem mittleren Molgewicht (Mw) von 4000 g/Mol und 24,9 g eines Polyglycidylethers auf Basis von Bisphenol A mit einem Epoxidäquivalentgewicht von 183 g/Eq. wurden zusammen auf 100 °C erhitzt und unter Rühren mit 0,35 ml 50 %iger wäßriger Tetrafluoroborsäure versetzt. Das Äquivalentverhältnis von OH-Gruppen zu Epoxidgruppen betrug 1 : 1,20. Die Mischung wurde weiter auf 130 °C erwärmt und bei dieser Temperatur gehalten, bis das Epoxidäquivalentgewicht des Reaktionsproduktes ca. 100000 g/Eq. betrug. Anschließend wurde dieses unter Rühren und leichtem Erwärmen auf ca. 70 °C in einer Mischung aus 125 g Wasser und 125 g 2-Pro-panol gelöst. Die erhaltene leicht gelbliche, klare Emulgatorlösung wies eine Viskosität (Ubbelohde, 25 °C) von 2300 mPa*s und einen Festkörpergehalt von 50 Gew.-% auf.

2) Herstellung einer wäßrigen Epoxidharzdispersion

In einem 1-l-Vierhalskolben, ausgerüstet mit Thermometer, Flügelrührer, Rückflußkühler, Tropftrichter und Heizeinrichtung wurden in einer Stickstoffschutzgasatmosphäre 59 g eines Polypropylenglykol-diglycidylethers mit einem Epoxidäquivalentgewicht von 330 g/Eq. und 91 g Bisphenol A unter Rühren auf 120 bis 125 °C erwärmt und anschließend 170 mg Katalysator 1201 der Fa. Shell Chemie zugegeben. Danach erwärmte man auf 150 bis 160 °C und hielt das Reaktionsgemisch bei dieser Temperatur, bis das Epoxidäquivalentgewicht des Produktes größer als 100000 g/Eq. war. Nach Abkühlung auf 120 bis 130 °C wurden 288 g eines Polyglycidylethers auf Basis von Bisphenol A mit einem Epoxidäquivalentgewicht von 183 g/Eq. sowie weitere 150 mg des Katalysators zugegeben und erneut auf 150 bis 160 °C erwärmt. Man hielt bei dieser Temperatur, bis das Kondensationsprodukt ein Epoxidäquivalentgewicht von 460 bis 470 g/Eq. aufwies und kühlte dann auf 95 °C ab. Unter guter Rührung wurden nun 76 g des gemäß Beispiel I.1) hergestellten Emulgators zugesetzt und 60 Minuten verrührt, wobei die Temperatur auf 80 °C abfiel. Bei einer Rührgeschwindigkeit von ca. 600 UpM wurden dann in 15 Minuten 70 g deionisiertes Wasser gleichmäßig zudosiert und 45 Minuten verrührt. Danach wurden bei 65 °C weitere 90 g deionisiertes Wasser zudosiert und 60 Minuten verrührt. Schließlich wurde die entstandene wäßrige Dispersion noch mit weiteren 190 g deionisiertem Wasser verdünnt und mit 900 mg Mergal K 9 N der Fa. Riedel-de-Haen (Konservierungsmittel) versetzt. Die fertige Dispersion wies einen Festgehalt von 55,4 Gew.-%, eine Viskosität von 2300 mPa*s (Brookfield, 25 °C) sowie eine mittlere Teilchengröße von 540 nm (Photokorrelationsspektroskopie) auf.
Teilweise wurden die Dispersionen unmittelbar vor dem Gebrauch zur Herstellung von Mikrogelen mit weiterem deionisierten Wasser auf geringere Festkörpergehalte verdünnt.

**II. Herstellung der erfindungsgemäßen wäßrigen Mikrogel-Dispersionen**

(hinsichtlich der Zahlenangaben siehe Tabelle 1)

In einem 1-l-Vierhalskolben mit Thermometer, Rührer, Rückflußkühler, Tropftrichter und Heizeinrichtung wurden bei guter Rührung unter Stickstoff [B] Teile der gemäß I.2) hergestellten wäßrigen Epoxidharz-Dispersion mit dem in Spalte [C] angegebenen Festkörpergehalt auf die in Spalte [G] angegebene Temperatur erwärmt. Bei dieser Temperatur wurden [D] Gewichtsteile der stickstoffhaltigen Verbindung [E], gelöst in der gleichen Gewichtsmenge 2-Propanol (bis auf Beipiel [A] 2), bei dem nur Imidazol eingesetzt wurde) rasch zugegeben. Es wurde weiter bei der in [G] angegebenen Temperatur gerührt, bis nach der in Spalte [H] angegebenen Zeitspanne die entstandene Mikrogeldispersion ein Rest-Epoxidäquivalentgewicht von größer als 50000 g/Eq aufwies. (Anmerkung: Zur Bestimmung des Rest-Epoxidäquivalentgewichtes wird zweimal an ausreichend großen Proben die Aminzahl des Reaktionsgemisches bestimmt, davon einmal in Gegenwart von Tetra-n-butylammoniumbromid (Miterfassung von nicht umgesetzten Epoxidgruppen). Das Rest Epoxidäquivalentgewicht ergibt sich aus den bestimmten Aminzahlen dann gemäß:

$$\text{Rest-Epoxidäquivalentgewicht} = \frac{56.100}{(AZ_{TBAB} - AZ_o)}$$

mit:

$AZ_{TBAB}$ = Aminzahl, bestimmt in Gegenwart von Tetrabutylammoniumbromid und

$AZ_o$ = Aminzahl, bestimmt ohne Tetrabutylammoniumbromid)

Anschließend wurde auf 40 bis 50 °C abgekühlt und die wäßrigen Mikrogeldispersionen filtriert. Die fertigen Mikrogeldispersionen wiesen den in Spalte [I] angegebenen Festkörpergehalt, die in Spalte [K] angegebene Viskosität (Brookfield, 25 °c), den in Spalte [L] angegebenen pH-Wert (unverdünnt) und die in Spalte [M] angegebene Teilchengröße (Photokorrelationsspektroskopie) auf. Die durch Gefriertrocknung isolierten Mikrogele waren in den getesteten organischen Lösungsmitteln (Methoxypropanol, Ethoxypropanol, Ethanol, Aceton, Eisessig) nicht löslich.

| A | B | C | D | E | F | G | H | I | K | L | M |
|---|---|---|---|---|---|---|---|---|---|---|---|
| Beispiel Nr. | Gew.-Teile Dispersion | Festkörper d. Disp. [%] | Gew.-Teile N-haltige Verbdg | verwendete N-haltige Verbindung | Menge d. Initiators (pro Epoxidäquivalent d. Disp) [Mol] | Temperatur [°C] | Dauer [h] | Festkörper [%] | Viskosität [mPa*s] | pH-Wert | Teilchengröße [nm] |
| II.1 | 600 | 55,4 | 5 | N,N-Dimethyl-ethanolamin | 0,083 | 80 | 7 | 55,7 | 1750 | 12,4 | 465 |
| II.2 | 690 | 50,0 | 5 | Imidazol | 0,108 | 70 | 6 | 50,4 | 175 | 5,3 | 641 |
| II.3 | 690 | 50,0 | 5 | Triethylamin | 0,077 | 70 | 6 | 49,9 | 363 | 12,3 | 772 |
| II.4 | 690 | 50,0 | 2 | Triethylamin | 0,029 | 70 | 10 | 50,7 | 325 | 9,8 | 615 |
| II.5 | 647 | 50,0 | 1 | Triethylamin | 0,015 | 70 | 16 | 51,1 | 213 | 8,8 | 786 |
| II.6 | 690 | 50,0 | 5 | N,N-Dimethyl-benzylamin | 0,055 | 70 | 7 | 50,1 | 263 | 11,4 | 631 |
| II.7 | 637 | 53,0 | 5 | Piperidin | 0,089 | 80 | 6 | 53,1 | 550 | 11,2 | 511 |
| II.8 | 644 | 53,0 | 5 | N,N-Dimethylamino-propylamin | 0,098 | 80 | 5 | 53,4 | 4150 | 12,8 | 615 |

TABELLE 1

### III. Prüfung der erfindungsgemäßen Mikrogeldispersionen

1) Prüfung der Vergilbungsneigung

Zur Prüfung der Vergilbung bei thermischer Belastung wurden eine erfindungsgemäße Mikrogeldispersion (Beispiel II.1)) und eine Mikrogeldispersion gemäß EP-A 0 421 238, Beispiel 4.1. (Stöchiometrisch mit Aminen vernetzte Epoxidharzdispersion) jeweils mit einer Naßfilmstärke von 200 $\mu$m auf Milchglasscheiben aufgezogen und anschließend im Umluftofen 60 Minuten auf 150 °C bzw. 250 °C erhitzt. Die verbleibenden Rückstände wurden hinsichtlich ihrer Vergilbung entsprechend der Jodfarbzahlskala bewertet (Tabelle 2).

TABELLE 2

|  | 60 min auf 150 °C erhitzt | 60 min auf 250 °C erhitzt |
|---|---|---|
| erf.gemäße Mikrogeldispersion Beispiel II.1 | JFZ 1 | JFZ 8 |
| gem EP-A 0 421 238 Beispiel 4.1. | JFZ 4 | JFZ 18 |

2) Prüfung der erfindungsgemäßen Mikrogele als Füllstoff (teilweiser Titandioxid-Ersatz) in Elektrotauchlacken für Kataphorese

Alle Mengenangaben erfolgen in Gewichtsteilen. Der Siebrückstand und die "L-Blech"-Beschichtung wurden folgendermaßen bestimmt bzw. durchgeführt:

Siebrückstand: 1 l der verdünnten Lacklösung wurde durch ein gewogenes Perlonsieb (Maschenweite 30 $\mu$m) gegossen. Das Sieb wurde dann mit deionisiertem Wasser nachgespült und nach Trocknung (1 h bei 125 °C) gewogen. Die Differenz der beiden Wägungen ergibt den Siebrückstand in mg bezogen auf 1000 ml Bad.

"L-Blech"-Beschichtung: Ein zinkphosphatiertes Stahlblech (ca. 10 x 20 cm) wurde am unteren Ende rechtwinklig gebogen (3 cm waagerechte Fläche) und im Beschichtungsbad so eingehängt, daß der waagerechte Schenkel des "L" etwa 15 cm unter der Oberfläche des Lackbades war. Die Beschichtung erfolgte bei Rührung und mit einer Beschichtungsdauer von 4 Minuten. Nach Ende der Beschichtung verblieb das Blech noch zwei Minuten im Bad. Anschließend wurde das Blech aus dem Bad genommen, nach weiteren zwei Minuten mit Wasser gespült und eingebrannt. Das Blech wurde visuell hinsichtlich Verlauf, Glanz und Sedimentationserscheinungen beurteilt.

2.1) Bereitung der Bindemittel-Dispersion [analog EP-A 0 421 238, Beisp. (5.1)]

a) 210 Teile Diethanolamin, 102 Teile N,N-Dimethylaminopropylamin und 636 Teile eines Adduktes aus einem mol 2-Methylpentamethylendiamin und zwei mol Glycidylester der Versaticsäure (Cardura(R) E10, Fa. Shell Chemie) wurden zu 3400 Teilen Bisphenol-A-Epoxidharz (Epoxid-Äquivalentgewicht ca. 480 g/Eq.) in 2341 Teilen Methoxypropanol-2 gegeben. Das Reaktionsgemisch wurde vier Stunden unter Rühren bei 60 bis 90 °C und dann eine Stunde bei 120 °C gehalten. Hydroxylzahl: ca 155 mg KOH/g Festharz; Aminzahl: ca. 77 mg KOH/g Festharz. 120,6 Teile dieser Bindemittellösung wurden mit 32,7 Teilen einer Härterlösung [s. 2.1)b)], 5 Teilen Texanol, 1,5 Teilen 2-Ethylhexanol und 2,3 Teilen 50 %iger wäßriger Ameisensäure vermischt und im Vakuum bei Temperaturen bis zu 80 °C auf ca. 90 Gew.-% Festkörper eingeengt. Anschließend wurde mit 139 Teilen deionisiertem Wasser bei guter Rührung eine 40 Gew.-%ige Dispersion mit einer mittleren Teilchengröße von 216 nm hergestellt.

b) Zu 174 Teilen Desmodur T 80 (80 % 2,4-, 20 % 2,6-Toluylendiisocyanat) wurden bei 40 bis 60 °C während 60 bis 120 Minuten 124 Teile Butylglykol und 0,3 Teile Dibutylzinnlaurat einlaufen gelassen und anschließend bis zu einem % NCO-Wert von ca. 12,8 bis 13,5 bei dieser Temperatur gehalten. Zu 298 Teilen dieser Verbindung in 146 Teilen Toluol wurden portionsweise 42,4 Teile Trimethylolpropan eingebracht und bei 80 °C bis zu einem % NCO-Wert von praktisch 0 umgesetzt.

2.2) Herstellung eines Pastenharzes und Herstellung Mikrogel-haltiger Pigmentpasten [analog Ep 0 421 238, Beisp. (5.2)]

a) Zu einer Lösung von 204 Teilen N,N-Dimethylaminopropylamin in 1224 Teilen Ethoxypropanol wurden bei 60 bis 80 °C während einer Stunde 1708 Teile Denacol (R) EX-145 (Phenol-(EO)$_5$-Glycidylether) einlaufen gelassen und anschließend bei 80 bis 100 °C gehalten, bis das Epoxid-Äquivalentgewicht mehr als 100 000 g/Eq. betrug (Aminzahl ca. 117 mg KOH/g Festharz; ca. 60 Gew.-%ig). Zu dieser Lösung wurden 72 Teile deionisiertes Wasser und 400 Teile 90 %ige Milchsäure unter Kühlung einlaufen gelassen und anschließend mit 128 Teilen Butylglykol auf 60 Gew.-% verdünnt.

b) 1280 Teile Beckopox(R) SEP 311 (75 %ig in Xylol) wurden auf 80 °C erwärmt. Zu dieser Lösung wurden während einer Stunde 1184 Teile des Urethans 2.2)d) einlaufen gelassen und bei 80 °C gehalten, bis der % NCO-Wert praktisch 0 war. wurde das Lösemittel im Vakuum abdestilliert und mit 1232 Teilen Ethoxypropanol auf ca. 60 Gew.-% verdünnt.

c) In die unter 2.2)b) erhaltene Lösung wurde 2.2)a) eingetragen und bei 60 bis 80 °C gehalten, bis eine Säurezahl von praktisch 0 und ein Epoxid-Äquivalentgewicht von größer als 100 000 g/Eq. erreicht war.

d) Zu 348 Teilen Desmodur T 80 in 296 Teilen Xylol wurden bei 40 bis 60 °C 540 Teile iso-Octadecylalkohol und 0,9 Teile Dibutylzinnlaurat einlaufen gelassen und anschließend bis zu einem % NCO-Wert von ca. 9,5 bei dieser Temperatur gehalten.

Aus der Pastenharzlösung gemäß 2.2)c) wurden gemäß der nachstehenden Formulierung Pigmentpasten hergestellt: 23 Teile Pastenharzlösung (ca. 60 Gew.-%ig) wurden mit 8,82 Teilen Dibutylzinnoxid versetzt und bei 40 bis 60 °C während einer Stunde gut homogenisiert, anschließend wurde mit 13,73 Teilen 75 Gew.-%iger wäßriger basischer Bleisilikatpaste, 2,94 Teilen Farbruß Printex(R) 25 und 11 Teilen Titandioxid RSE 50 versetzt, gut homogenisiert, anschliebend mit deionisiertem Wasser auf Mahlviskosität versetzt und auf einer Perlenmühle vermahlen. Diese Pigmentvorpaste wurde anschließend mit 75,6 Teilen der Mikrogel-Dispersionen II.2 bzw. II.3 auf einem Dispergiergerät abgemischt und mit deionisiertem Wasser auf einen Festkörper von 60 Gew.-% eingestellt (53,0 Gew.-% Mikrogel in der Pigmentgesamtmenge, Pigment-Bindemittel-Verhältnis in der Paste 5,1 : 1).

2.3) Prüfung der Mikrogel-haltigen Elektrotauchlacke

1000 Teile der gem. 2.1)a) erhaltenen wäßrigen KTL-Bindemitteldispersion wurden mit deionisiertem Wasser auf einen Festkörper von 25 Gew.-% eingestellt. Diesem Klarlack wurden dann jeweils 136,8 Teile der gem. 2.2) erhaltenen Pigmentpasten unter Rühren zugesetzt und anschließend mit deionisiertem Wasser auf einen Festkörper von 18 Gew.-% (1 h bei 125 °C) eingestellt. Die Tauchlacke wurden der kataphoretischen Abscheidung in einem offenen Glasgefäß unterworfen. Als Kathode diente phosphatiertes Stahlblech (Bonder(R) 26 der Fa. Chemetall) und als Anode, im Abstand von 5 bis 10 cm von der Kathode, blankes Stahlblech. Die Badtemperatur lag bei 32 °C, die Abscheidedauer betrug zwei Minuten. Die beschichteten Bleche wurden bei 170 °C Ofentemperatur (Umluftofen) 20 Minuten eingebrannt. Zusätzlich wurde nach 24 Stunden und vier Wochen (Rühren bei Raumtemperatur) der Siebrückstand bestimmt und eine "L-Blech"-Beschichtung durchgeführt. Die Ergebnisse sind in Tabelle 3 zusammengefaßt.

TABELLE 3

| in der Pigmentpaste verwendetes Mikrogel | Schichtdicke [μm] | Durchbruchspanng. [V] | Rauhigkeits Wert [μm] | Verlauf | Siebrückstand nach 1 d [mg/l] | Siebrückstand n. 4 Wo. [mg/l] | L-Blech nach 1 d | L-Blech n. 4 Wo. |
|---|---|---|---|---|---|---|---|---|
| erf.gem. Bsp. II.2 | 22 - 23 | 375 | 0,25 -0,35 | i.O | 0 | 65 | i.O. | LM |
| erf.gem. Bsp. II.3 | 19 - 21 | 425 | 0,2 -0,3 | i.O. | 23 | 74 | i.O. | LM |
| gem. EP 0 421 238 Bsp. 5.3.3 | 18 - 19 | 350 | n.a. | i.O. | 10 | 20 | i.O. | i.O. |
| gem. EP 0 421 238 Bsp. 5.3.12 (o. Mikrogel) | 17 - 18 | 350 | n.a. | i.O | 10 | 80 | i.O. | i.O. |

Abkürzungen: n.a. - nicht angegeben; i.O. - in Ordnung, keine Sedimentationserscheinungen; LM - leichte Mattierung.

3) Verwendung der erfindungsgemäßen Mikropartikeldispersionen als Mattierungsmittel in einem wäßrigen Bindemittelsystem

50 g des wäßrigen Epoxidharzhärters Beckopox(R)-Spezialhärter EH 623 (Fa. Hoechst AG) wurden mit der gleichen Gewichtsmenge deionisiertem Wasser versetzt und sorgfältig verrührt. Zu dieser Lösung gab man unter dauerndem Rühren 244 g der unter I.2) hergestellten wäßrigen Epoxidharzdispersion und 1198 g einer erfindungsgemäßen Mikrogeldispersion gemäß Beispiel II.1. Nach kurzer Wartezeit wurde die wäßrige Beschichtungsmischung mit einer Naßfilmstärke von 200 $\mu$m auf eine sorgfältig entfettete Glasplatte aufgezogen und bei Raumtemperatur trocknen gelassen. Die Beschichtung war nach 30 Minuten staubtrocken und nach 2 Stunden klebfrei. Sie wies nach einem Tag Härtungsdauer (bei Raumtemperatur) eine Pendelhärte (nach König) von 70 Sekunden und nach einer Woche eine Pendelhärte von 100 Sekunden auf. Der nach einer Woche Härtungszeit bestimmte Glanzgrad (nach Lange) betrug 2,1 % bei 20 ° und 7,6 % bei 60 °.

**Patentansprüche**

1.  Vernetzte Polymermikroteilchen auf Epoxidharzbasis, erhalten durch Polymerisation von wäßrigen Dispersionen epoxidgruppenhaltiger Verbindungen (A) in Gegenwart von bis zu 0,2 mol, vorzugsweise 0,02 bis 0,15 mol (bezogen auf den in (B) enthaltenen Stickstoff) pro Epoxidäquivalent einer stickstoffhaltigen organischen Verbindung (B) und anschließende Isolierung.

2.  Wäßrige Dispersionen vernetzter Polymermikroteilchen auf Epoxidharz-Basis, erhalten durch Polymerisation wäßriger Dispersionen epoxidgruppenhaltiger Verbindungen (A) in Gegenwart von bis zu 0,2 mol, vorzugsweise von 0,02 bis 0,15 mol (bezogen auf den in (B) enthaltenen Stickstoff) pro Epoxidäquivalent einer Stickstoff-haltigen organischen Verbindung (B).

3.  Wäßrige Dispersionen gemäß Anspruch 1, dadurch gekennzeichnet, daß sie eine mittlere Teilchengröße von höchstens 5 $\mu$m, vorzugsweise von 0,2 bis 3,0 $\mu$m, und einen Gehalt an vernetzten Polymermikroteilchen von mindestens 10 Gew.-%, vorzugsweise 40 bis 70 Gew.-%, aufweisen.

4.  Wäßrige Dispersionen gemäß Anspruch 2 und/oder 3, dadurch gekennzeichnet, daß sie als Lösemittel Glykole, Mono- und Diether und -ester von Glykolen, aliphatische Alkohole mit gegebenenfalls verzweigten Alkylresten mit 1 bis 12 Kohlenstoffatomen, cycloaliphatische und araliphatische Alkohole, Ester und Ketone sowie aliphatische, cycloaliphatische und/oder aromatische Kohlenwasserstoffe einzeln oder im Gemisch in einer Menge von bis zu 25 Gew.-% enthalten.

5.  Wäßrige Dispersionen gemäß einem oder mehreren der Ansprüche 2 bis 4, dadurch gekennzeichnet, daß sie die noch weitere übliche Lackadditive wie Füllstoffe, Pigmente, Katalysatoren, Verlaufs- bzw. Verdickungsmittel, Entschäumer, Netzmittel, Konservierungsmittel, Schutzkolloide u. dgl. enthalten.

6.  Wäßrige Dispersionen gemäß einem oder mehreren der Ansprüche 2 bis 5, dadurch gekennzeichnet, daß die Polymermikropartikel noch zusätzliche vernetzungsaktive Zentren enthalten.

7.  Wäßrige Dispersionen gemäß einem oder mehrerer der Ansprüche 2 bis 6, erhalten durch Polymerisation in Gegenwart von aliphatischen, cycloaliphatischen, araliphatischen, aromatischen, heterocyclischen und/oder heteroaromatischen Verbindungen, die mindestens ein Stickstoffatom enthalten, das über ein freies Elektronenpaar verfügt.

8.  Wäßrige Dispersionen gemäß einem oder mehreren der Ansprüche 2 bis 7, erhalten durch Umsetzung in Gegenwart von Triethylamin, N,N-Dimethyl-ethanolamin, N-Methyldiethanolamin, N,N-Dimethyl-benzylamin, Piperidin und/oder Bis(aminopropyl)methylamin.

9.  Wäßrige Dispersionen gemäß einem oder mehreren der Ansprüche 2 bis 8, dadurch gekennzeichnet, daß als wäßrige Epoxidharz-Dispersionen (A) solche eingesetzt werden, die die folgenden Komponenten enthalten:

(1) 20 bis 75 Gew.-%, bezogen auf die gesamte Dispersion, eines Epoxidharzes, das ein Kondensationsprodukt aus

a) 50 bis 95, vorzugsweise 55 bis 85 Gew.-% einer oder mehrerer Epoxidverbindungen mit im Mittel mindestens einer, vorzugsweise mindestens zwei Epoxidgruppen pro Molekül und einem Epoxidäquivalentgewicht von 90 bis 3000 g/Eq. und

b) 5 bis 50, vorzugsweise 15 bis 45 Gew.-% eines aromatischen Polyols darstellt;

(2) 3 bis 20, vorzugsweise 4 bis 15 Gew.-%, bezogen auf die gesamte Dispersion, eines Emulgators, enthaltend

a) 20 bis 100, vorzugsweise 40 bis 60 Gew.-% eines Kondensationsproduktes aus einem aliphatischen Polyol mit einem mittleren Molekulargewicht (Mw) von 200 bis 20000, und einer Epoxidverbindung mit mindestens zwei Epoxidgruppen pro Molekül und einem Epoxidäquivalentgewicht von 100 bis 2000 g/Eq., wobei das Äquivalentverhältnis der OH-Gruppen zu den Epoxidgruppen 1 : 0,85 bis 1 : 1,5 ist und das Epoxidäquivalentgewicht dieses Kondensationsproduktes zwischen 5000 und 400000 g/Eq. liegt,

b) bis zu 50, vorzugsweise bis zu 30 Gew.-% eines organischen Lösungsmittels und

c) bis zu 80, vorzugsweise 15 bis 60 Gew.-% Wasser;

(3) bis zu 10 Gew.-%, bezogen auf die gesamte Dispersion, organische Lösungsmittel, wobei gegebenenfalls vorhandene Lösungsmittel gemäß (2)b) mit einbezogen sind;

(4) Wasser in der an 100 Gew.-% fehlenden Menge, und die dadurch hergestellt werden, daß man das Epoxidharz (1) zunächst mit dem Emulgator (2) sowie gegebenenfalls organischen Lösemitteln gemäß (3) und anschließend mit Wasser (4) verrührt.

10. Verfahren zur Herstellung der wäßrigen Dispersionen von vernetzten Polymermikropartikeln (C) entsprechend einem oder mehreren der Ansprüche 2 bis 9, dadurch gekennzeichnet, daß man zunächst die wäßrige Epoxidharz-Dispersion (A), vorzugsweise unter einer Schutzgasatmosphäre, unter Rührung auf eine Temperatur von 30 bis 100 °C, vorzugsweise auf 60 bis 95 °C erwärmt, gegebenenfalls noch organische Lösungsmittel zufügt, anschließend die stickstofforganische Verbindung (B), vorzugsweise gelöst in einem organischen Lösungsmittel und/oder Wasser, zugibt und weiter rührt, bis das Rest-Epoxidäquivalentgewicht des Reaktionsgemisches mehr als 20.000 g/Eq., vorzugsweise mehr als 50.000 g/Eq. aufweist.

11. Verwendung der wäßrigen Dispersionen vernetzter Polymermikropartikel nach einem oder mehreren der Ansprüche 2 bis 10 oder der isolierten Polymermikropartikel nach Anspruch 1 als organische Füllstoffe, Pigment, Mattierungsmittel und/oder Verstärkungsmittel für Bindemittelsysteme sowie deren Einzelkomponenten, Lackzubereitungen, Beschichtungs- und Formmassen, Zwischenbeschichtungen, Klebstoffe udgl., vorzugsweise auf wäßriger Basis.

12. Verwendung der wäßrigen Dispersionen vernetzter Polymermikropartikel nach einem oder mehreren der Ansprüche 2 bis 10 oder der isolierten Polymermikropartikel nach Anspruch 1 als teilweiser oder vollständiger Ersatz von Weißpigmenten und/oder Füllstoffen in Bindemittelsystemen sowie deren Einzelkomponenten, Lackzubereitungen, Beschichtungs- und Formmassen, Zwischenbeschichtungen, Klebstoffe udgl., vorzugsweise auf wäßriger Basis.

13. Verwendung nach Anspruch 11 und/oder 12, dadurch gekennzeichnet daß es sich bei den Lackzubereitungen um wäßrige Kataphorese-Elektrotauchlacke und bei den Bindemittelsystemen um wäßrige 2K-Epoxid-Amin-Bindemittelsysteme handelt.

14. Verwendung nach einem oder mehreren der Ansprüche 11 bis 13 dadurch gekennzeichnet, daß die wäßrigen Dispersionen vernetzter Polymermikropartikel nach einem oder mehreren der Ansprüche 2 bis 10 oder der isolierten Polymermikropartikel nach Anspruch 1 ohne weiteres Anreiben bzw. Vermahlen direkt in den Bindemittelsystemen, Lackzubereitungen, Zwischenbeschichtungen, Beschichtungs- und Formmassen, Klebstoffen u.dgl. eingesetzt werden.